# EUROPEAN PATENT SPECIFICATION

(11) **EP 3 496 841 B1**
(45) Date of publication and mention of the grant of the patent: **30.09.2020**
(21) Application number: 17752105.1
(22) Date of filing: 10.08.2017
(51) Int. Cl.: B01D 53/64, B01D 53/73, B01D 53/68, B01D 53/66, B01D 53/77, F23J 15/04, B09B 3/00

(54) **CO-TREATMENT OF FLUE GAS CLEANING WASTE AND ACIDIC SCRUBBER LIQUID**
CO-BEHANDLUNG VON RAUCHGASREINIGUNGSABFÄLLEN UND SÄUREWÄSCHERFLÜSSIGKEIT
CO-TRAITEMENT DE DÉCHETS DE NETTOYAGE DE GAZ DE COMBUSTION ET DE LIQUIDE ÉPURATEUR ACIDE

(30) Priority: 11.08.2016 DK 201670612
(43) Date of publication of application: 19.06.2019
(73) Proprietor: Stena Recycling International AB, 414 58 Göteborg (SE)
(72) Inventor: RASMUSSEN, Erik, 2820 Gentofte (DK)
(74) Representative: Chas. Hude A/S
(86) International application number: PCT/EP2017/070281
(87) International publication number: WO 2018/029290

(56) References cited:
- EP-B1- 1 251 940
- WO-A1-2005/040437
- DE-A1- 3 918 292
- US-A- 5 045 115
- US-A- 5 512 257

## Description

### Field of invention

The present invention relates to a method of treating residues from flue gas cleaning systems. Dry residues may be boiler and/or filter dust and waste from wet flue gas cleaning processes or flue gas cleaning waste from semi-dry or dry flue gas cleaning processes. The method involves co-treating of the dry residues with acidic scrubber liquid obtained from a wet flue gas cleaning process or another acidic liquid source.

### Background

Incineration plants provide waste management that allows energy recovery of waste from households and other sources while minimizing the need for landfilling. Incineration of waste generates heat, which is used for district heating and electricity production, but the process also produces a number of waste byproducts. Flue gases are cleaned from harmful substances in order to minimize pollution when gases are emitted into the air. Uncleaned flue gas usually contains large amounts of acidic components such as sulfur oxides and hydrochloric acid. These acidic gases are often cleaned in flue gas scrubbers generating both a hydrochloric acid waste stream and a solid waste stream (gypsum).

Flue gases from waste incineration are cleaned from harmful substances and particulate matter before release to the atmosphere. Incineration of waste produces a number of waste byproducts, including at least two ash fractions, bottom ash and fly ash. Bottom ash remains in the incinerator and can be landfilled relatively unrestricted as it is normally not considered hazardous waste (HW). Bottom ash may also be used in construction, e.g. as aggregate in road building or as bulk filler.

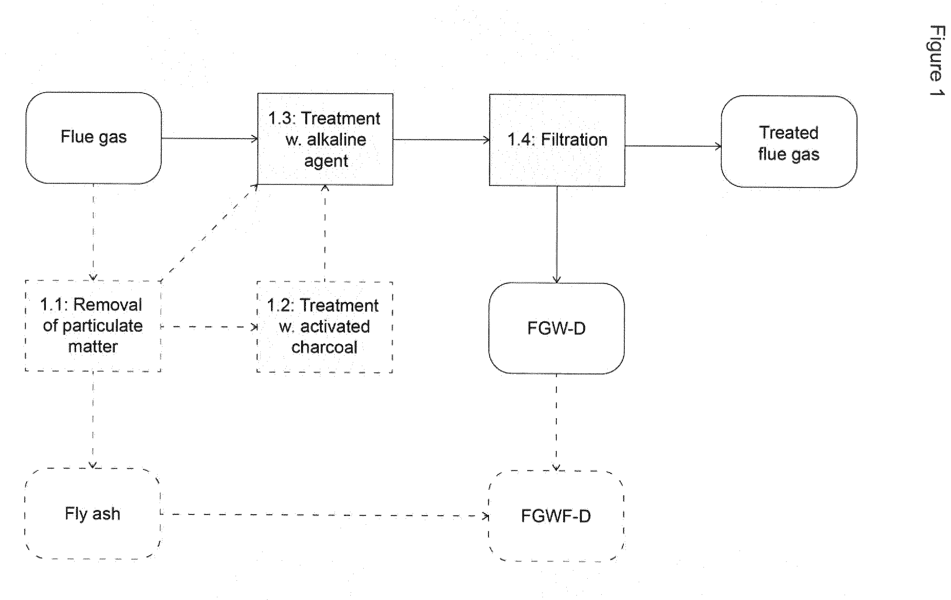

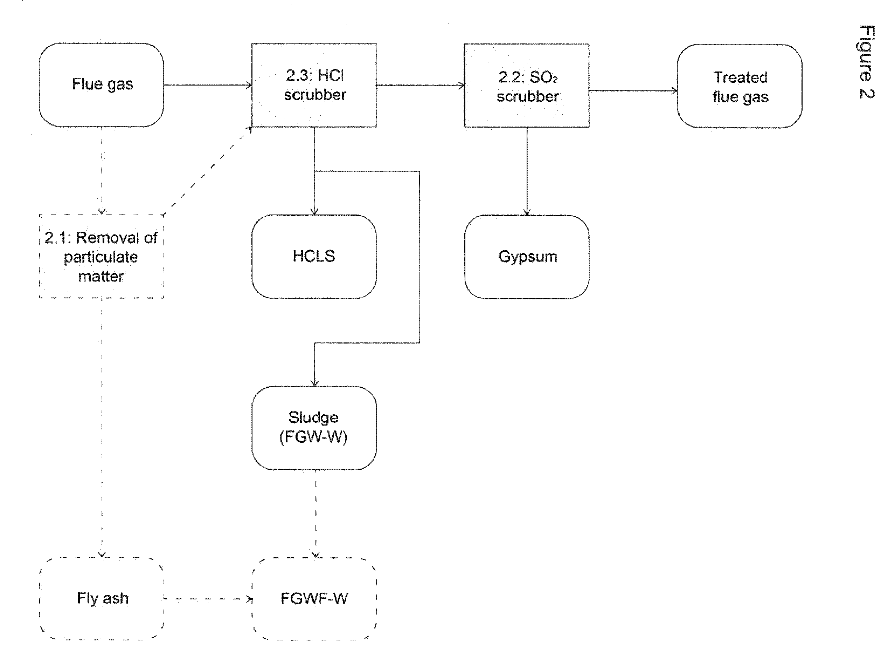

Scrubber systems for removal of acidic gases present in the flue gas from an incinerator furnace can rely on the dry or semi-dry method as shown in figure 1, or on the wet method as shown in figure 2.

Dry scrubber systems, as shown in figure 1, rely on the use of a solid alkaline agent to neutralize and/or bind acidic compounds in the flue gas. Optionally, particulate matter (i.e. fly ash) is removed from the flue gas before the scrubbing, e.g. by cyclones, but in some cases, such removal does not take place before the scrubbing, and in such cases the fly ash is removed by adsorption to the solid alkaline agent. In some cases activated carbon is used to remove e.g. mercury and dioxins from the flue gas before the scrubbing. Often chalk, hydrated lime, soda ash, sodium bicarbonate or limestone, or a combination thereof is used as the alkaline agent. Dry scrubbing may rely on the dry sorbent method, in which the alkaline agent is injected into the flue gas in the dry scrubber, or on the semi-dry spray method, in which a slurry of the alkaline agent and water is injected into the semi-dry scrubber. The heat of the flue gas ensures that the water in the slurry evaporates, leaving a dry or semi-dry waste product consisting of surplus alkaline agent and reaction products (called dry flue gas waste from dry scrubbing, FGW-D). If fly ash has not been separated from the flue gas prior to the dry scrubbing, or if the separated fly ash is combined with the FGW-D, the waste product is here referred to as FGWF-D. The FGW-D or FGWF-D may also contain waste from the activated carbon cleaning process.

Wet scrubber systems, as shown in figure 2, most often rely on an initial removal of particulate matter such as fly ash. The means for removal of fly ash can be cyclones, electro filters or baghouse filters. Fly ash is thus to a high degree separated from the flue gas before the next step in the flue gas treatment, which is the wet scrubbing or washing. Wet scrubbing often comprises at least two processes, namely acidic scrubbing and alkaline scrubbing. Wet scrubbers rely on the solubility of acidic components in a scrubbing liquid. Flue gas is brought in contact with the scrubbing liquid by forcing the flue gas through the liquid or by spraying the liquid into a stream of flue gas. Spray towers or venturi scrubbers are often used in the treatment of flue gas. More than one scrubber may be employed to remove different compounds in the flue gas. Acidic scrubbing is often carried out prior to alkaline scrubbing. Alkaline scrubbing removes sulfur compounds such as SO₂ from the flue gas, whereas the acidic scrubbing removes hydrochloric acid (HCI) from the flue gas and forms acidic scrubber liquid (HCLS). HCLS from an acidic scrubber is highly acidic and may contain hazardous compounds such as heavy metals, why it must be neutralized with an alkaline agent and further cleaned before discharged into a recipient. Valuable hydrochloric acid content in the HCLS is not exploited in the present art.

Often the HCLS is treated with an alkaline agent and/or a sulfide to form a heavy metal-containing sludge (FGW-W). This sludge is often combined with the fly ash to form a wet flue gas waste and fly ash product (FGWF-W). FGWF-W is classified as hazardous waste due to content of heavy metals.

As described above, dry flue gas scrubbing does not rely on scrubbing using a liquid for removal of acidic components, but rather on the reaction between a solid or semi-solid alkaline cleaning agent and acidic components in the flue gas to clean the latter. Entrained particulate matter such as fly ash and other hazardous components typically react with the cleaning agent. Spent alkaline cleaning agent is typically mixed with fly ash to form dry or semi-dry FGW and deposited at long-term facilities as it is hazardous. To reduce acidic emissions a surplus of alkaline cleaning agent is used, and dry or semi-dry FGW (FGW-D or FGWF-D) is thus highly alkaline.

Incineration also produces bottom ash residues. Bottom ash is often not classified as hazardous waste and can be landfilled or used in e.g. concrete or road pavement. Fly ash often contains high concentrations of halogens and heavy metals which rules out landfilling, according to the EU-directive 2003/33/EF. Today many incinerators control dioxin and furan formation during operation, why dioxin and furan concentrations in the ashes from such incinerators are quite low. Current management of byproducts from flue gas cleaning includes landfilling, which entails a high risk of leaching of heavy metals and water soluble salts and is thus subject to regulation. Another approach is the extraction of heavy metals and water soluble salts to allow disposal of the treated flue gas cleaning waste into the environment. A method for treatment of flue gas cleaning residues is disclosed in EP1251940. There are other known processes within the field of fly ash treatment/stabilization and/or metal recovery. All of the proposed processes use some kind of stabilizing agent. The simplest option is to use water to wash the fly ash. However, while water washing might remove most of the water soluble salts the leachability of the residual heavy metals in the solid is largely unaffected. Some of other proposed or commercially available processes are listed below:
The VKI process (Hjelmar & Birch, 1997). The fly ash is treated with water to remove water soluble salt and is subsequently or simultaneously treated with carbon dioxide (CO₂) and/or phosphoric acid (H₃PO₃). The aim of the process is to produce a solid residue suitable for landfilling. The waste water needs to be treated to remove heavy metals.

The Ferrox process (ISWA Beacon Conference, 2nd seminar on Waste to Energy, October 25-26, 2001): Water is used to remove water soluble salts and iron sulfate (FeSO₄) is added which by oxidation is able to bind heavy metals to an iron oxide phase. The iron oxide phase will form an insoluble solid phase (Ferrox-product) which contains most of the heavy metals.

In the so-called 3R process (Vehlow, 1995) pre-collected fly ash from incinerators equipped with wet scrubbers is extracted with the acidic first scrubber stage effluent from which the mercury has been removed. The filter cake from the extraction is fed onto a grate.

The 3R process is also available as the FLUWA process. This process use scrubber liquid to stabilize the fly ash. The primary aim of this process is to recover heavy metals, mainly zinc, as an alternative to primary sources. Upon mixing of the fly ash and scrubber liquid (FLUWA process) the pH is kept low (< 3) to recover as much metals as possible. The inorganic filter cake after extraction is returned to the waste incineration furnace since most of the buffering capacity is consumed and the leaching of the residual heavy metals is high.

US 5512257 (Frey) teaches a method for treatment of fly ash, wherein fly ash is treated with washing liquid from a flue gas scrubber comprising sodium sulfate and hydrogen chloride, filtered, after which the resulting fly ash residue is washed with a precipitating agent to yield a fly ash residue cake wherein heavy metals are present in an insoluble form.

US 5045115 (Gmunder) teaches a method wherein solid residues from combustion plants containing heavy metals are washed with water to solubilize the heavy metals. The pH of the heavy metal solution is then made alkaline, and heavy metals are precipitated and concentrated to a sludge for storage.

DE 3918292 discloses a process for the treatment of fly ash from an incineration plant comprising acidic treatment of the fly ash, separation and further aqueous treatment of the solid fraction.

EP 1251940 discloses a method of treating a halogen containing solid or semisolid waste material from a flue gas cleaning process, wherein a suspension of the waste material under alkaline and hot conditions are separated into solid and liquid material.

Societal demands are increasing for sustainable management of incineration byproducts. Similarly, bio-fueled heating plants and secondary metal production also generate waste byproducts that need to be managed in a more sustainable manner.

While waste incineration for environmental reasons is preferable compared to landfilling, some of the byproducts of the energy recovery do not comply with current leaching limits according to EU-directive 2003/33/EF for disposal at landfills and must presently be landfilled either in old salt mines or in old lime quarries. In addition, the by-products may comprise valuable components such as salts, metals, and treated fly ash, which are not exploited when byproducts are landfilled.

Accordingly, there is a need for developing an improved process for treatment of residues or by-products from flue gas cleaning which process i) is economically attractive, ii) reuses waste products from flue gas cleaning methods, iii) results in products that can be landfilled without any specific pretreatment, iv) recovers valuable components in the waste (e.g. salts, metals) to be recycled, reused or delivered to a recipient.

The present invention addresses all of these needs.

### Description of the invention

The present invention relates to a method of co-treating flue gas cleaning waste (FGW) and acidic scrubber liquid (or another acidic aqueous liquid) from waste or biomass incineration plants or secondary metal production facilities.

Thus, an objective of the present invention is to provide a cleaning method for treatment of waste material from a flue gas cleaning process, whereby heavy metal and halogen containing waste material from a flue gas cleaning process are treated in such a manner that
i) the heavy metal(s) can be recycled or safely removed especially heavy metals such as Zn, Pb, Cu, Sb, and Cd,
ii) the residual heavy metal(s) in the non water soluble fraction of the fly ash are present in a form where leaching of the heavy metals is minimized, whereby the final material (X-FGW) may be landfilled without any further treatment as the degree of leaching is in compliance with current limit values according to EU-directive 2003/33/EF for disposal at local landfills for non-hazardous waste or hazardous waste,
iii) the halogen (mainly CI) content is transformed into a brine, that may be recycled, e.g. used as road salt and/or
iv) the brine may be led into a waste water treatment plant, a recipient or into the sea as waste water in compliance with local effluent standards

An objective of the invention is to provide a method that converts the waste material from incineration and other combustion processes into one or more products that can either be reused or safely released into the environment, as well as reducing the mass of waste products needing to be landfilled. Furthermore, it is an objective of the invention to reduce the hazardous properties of the treated waste material to such a degree that it complies with current EU-directive 2003/33/EF for disposal at local landfills for non-hazardous waste or hazardous waste or used as a construction material. A particular object of the invention is to provide a method of converting a fly ash or a flue gas cleaning waste and a highly acidic liquid waste product into one or more non-polluting waste products or valuable products in an economical feasible manner. These and other objects are accomplished by the method as defined in the claims. Importantly, the present invention can be used for treatment of flue gas waste from wet scrubbers as well as semi-dry or dry scrubbers, although it relies on the use of acidic scrubber liquid from a wet scrubber, or from another source of HCI.

The method according to the invention specifically relates to the co-treatment of halogen-containing solid or semi-solid waste with acidic scrubber liquid from a wet scrubber, or from another source of HCI. Thus, the starting material may be any one of fly ash, FGW-D, FGWF-D, FGW-W, FGWF-W, or a combination thereof (depending on the source) from a flue gas cleaning process together with the acidic scrubber liquid (in the present context also denoted: acidic scrubber liquid or HCLS) resulting from the same or from another flue gas cleaning process (or as mentioned above another source of HCI), such that the end products can be released into the environment, recycled, sold, or landfilled, and such that the amount of waste needing restricted or costly landfilling is substantially decreased.

Co-treating fly ash with acidic scrubber liquid according to the invention also lead to a significantly reduced consumption of precipitation chemicals (calcium carbonate, calcium hydroxide, sodium hydroxide and sulfide chemicals) normally used for neutralization of the acidic scrubber liquid.

The present invention enables the use of waste byproducts that stem from incineration of waste; however, the same or similar waste byproducts may also be obtained from other combustion or industrial processes, such as coal or biomass combustion for heat and electricity production or primary or secondary metal production.

The present invention is able to make use of the fly ash, wet, dry or semi-dry FGW with or without added fly ash (FGW-D, FGW-W, FGWF-D or FGWF-W), and HCLS or another source of HCI in a co-treatment process that results in1) a heavy metal-containing fraction, which may represent a commercial value; 2) a brine, which may be used directly or evaporated to form a salt product, or may be released into the sea or another recipient; 3) an oversize fraction, which is returned to the incinerator as it contains high levels of organic compounds; 4) a treated X-FGW fraction, which is less prone to leaching of heavy metals and halogens, and can thus be landfilled in a less restricted manner than FGW, or may be used in concrete production. Importantly, all ingoing products are used as they are, and treatment such as, e.g. mercury ion exchange or filtering with activated carbon is not necessary.

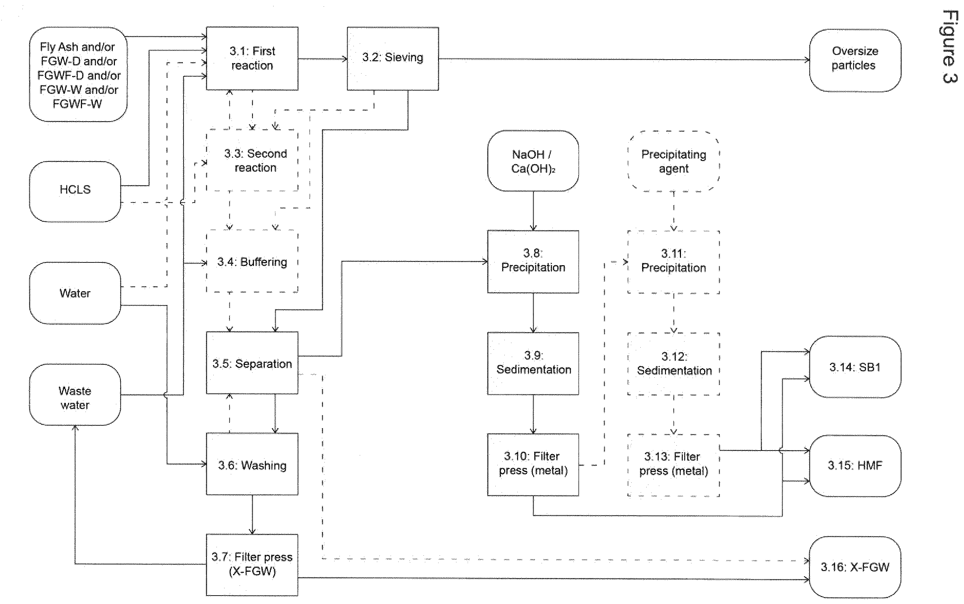

With reference to figure 3, the gist of this invention is thus that a suspension of fly ash and/or waste containing fly ash is formed optionally using water already used for washing downstream in the process or by using HCLS or another source of HCI. The amount of HCLS to be used is determined as follows:
Firstly, a known amount (by weight) of fly ash-containing waste to be cleaned is subjected to simple titration by the HCLS under pH control to a pH 3 to 10 or 3 to 7. To reach a pH of 7 or 5 for example requires a specific amount of the HCLS. Then, based on the total weight of the fly ash-containing waste to be cleaned, the corresponding volume of HCLS to obtain a pH of 7 is calculated by scaling. In some cases, this first step may be omitted provided that pH is controlled and adjusted in the first reaction tank (3.1) as described in the following.

Secondly, the amount of HCLS to be added to the suspension ensures that pH of the suspension is below 7 or 5 for a certain period of time (3.1 - first reaction step). The amount of HCLS is lower than the specific HCLS amount calculated in the first step. In general, the amount of HCLS that must be added is from about 50% to about 100% of the calculated volume. In general, the amount of HCLS that must be added is from about 70% to about 100%, from about 80% to about 100%, from about 85% to about 100% or from about 90 to about 100% of the volume calculated. Normally, about 85-95% of the calculated amount is added. The determined amount of HCLS is added for a certain time period while simultaneously keeping pH above 3 to 4 during HCLS addition. It is important to note that a dynamic process takes place, where pH initially is high (> 10), then the pH value decreases and during the chemical reaction the pH may be as low as between 3 and 4, followed by an increase in pH. It is important to avoid a pH lower than 3 to avoid unintentional extraction of for example silicates. Moreover, it is important to keep pH under 5- in order to avoid precipitation of heavy metals.

When the pH is below 5, the solid fraction is separated from the liquid phase (LF) and washed with water during which pH will self-regulate or be adjusted to a pH 7 to 11; the washing liquid is returned to the suspension-forming step; the liquid phase (LF) is treated with pH-adjusting and precipitating agents to precipitate the heavy metals; and the resulting precipitated heavy metals are separated from the resulting brine (3.10 - Filtering step). The end products are thus a brine (3.14), a heavy metal fraction (3.15 from 3.10 or 3.13), and an X-FGW-D, X-FGW-W, X-FGWF-D and/or X-FGWF-W fraction (3.16 commonly denoted X-FGW) that is not prone to leaching of heavy metals or halogens. See figure 3 for more details.

Apart from ingoing fly ash (FA), FGW-D, FGW-W, FGWF-D and/or FGWF-W and HCLS, the present invention only relies on the following consumables: water, which may be pure water, tap water or greywater; alkaline pH-adjusting agents such as alkaline metal hydroxides or alkaline earth metal hydroxide like e.g. NaOH or Ca(OH)₂ (used in step 3.8 - precipitation step); and optionally a heavy metal precipitating agent (e.g. a sulfide, such as TMT15) (3.11 - precipitation). The invention further relies on stirring, optionally heating, and filtration using e.g. filter presses, band filters or centrifuges. Band filters are also known as belt filters. No additional treatment of ingoing reagents is necessary at the present time, such as e.g. ion exchange or activated carbon filtering for mercury removal. Thus, the present invention provides an optimized cleaning process resulting in valuable material, which may be reused, and unhazardous material, which may be landfilled or used as construction material.

In general, a method of the invention comprises:
i) treating said waste material with acidic scrubber liquid to obtain a pH of from 3 to 7 in the liquid phase,
ii) separating solid and liquid material obtained in step i),
iii) treating the solid material from step ii) with water to obtain a pH in the aqueous phase ranging from about 7 to about 11 followed by separation of the thus washed solid material from the liquid to obtain treated waste,
iv) treating the liquid material from step ii) with one or more alkaline agent(s) and/or sulfides to obtain a pH of from about 9 to 11 to precipitate heavy metals,
v) optionally, separating the heavy metals from step iv) from the liquid to obtain a heavy metal fraction and a halogen salt solution,
wherein pH in step i) initially is from about 11 to about 13 and then gradually decreases to a pH of from 3 to 4 over a period of from 15 to 90 minutes as the scrubber liquid is added and reacts with the waste.

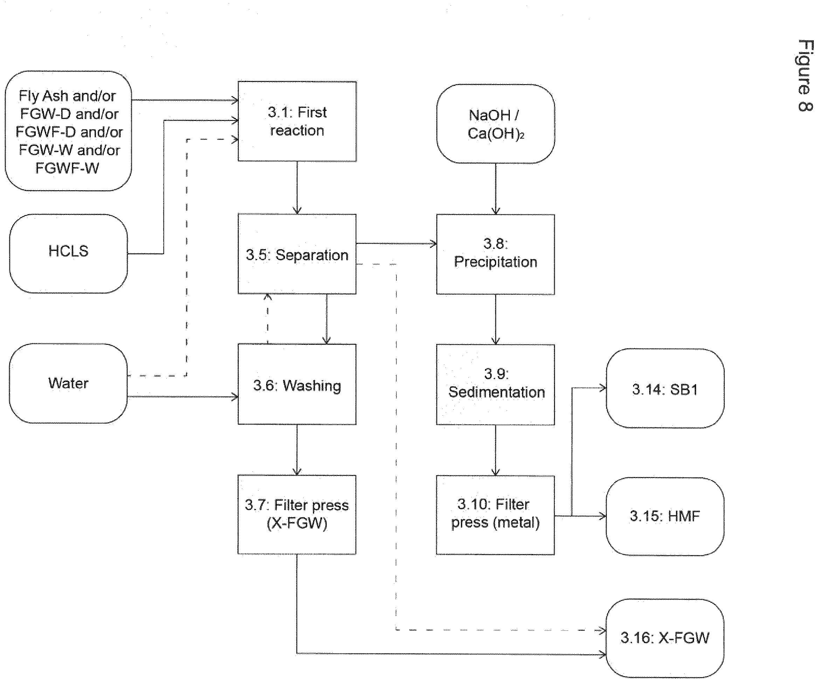

The above described method is illustrated in figure 8.

An important feature of the invention is the adjustment of pH. In the treatment with acidic scrubber liquid it is important that the pH is kept at the specified range. Some heavy metals such as Pb and Zn dissolve under both acidic and alkaline conditions, whereas others such as Cu and Cd only dissolve under acidic conditions.

More specifically and with reference to figure 3, where dotted lines indicate optional routes, there is disclosed a method of treating heavy metal and halogen containing waste material from flue gas cleaning systems, the method comprising
a) extracting fly ash containing material with a prescribed amount of HCLS and/or washing liquid from step e) in a reaction tank (3.1) so that the pH of the suspension of the fly ash containing material and the HCLS or liquid is monitored and maintained at a pH higher than 3 (local pH of from 3 to 4 is acceptable) to obtain a pH lower than 7 during the extraction, and wherein the weight ratio between the liquid and the waste material, the L:S ratio (L₁:S₁), is from about 2 to 15; the reaction time is from 15 to 90 minutes, and the temperature is from about 10 to about 70 °C,
b) optionally sieving the suspension obtained in step a) to remove solid material having a size greater than 0.1-1 mm (3.2),
c) separating the filtered suspension from step b) into a solid fraction (SF1) and a liquid fraction (LF1) (3.5),
d) suspending the solid fraction, SF1, in water (3.6), wherein the weight ratio between water and the solid fraction, the L:S ratio (L₂:S₂), is from 2 to 15, and wherein pH will self-regulate or is adjusted to a pH between 7 and 11,
e) separating the liquid from the suspension obtained in step d) to obtain treated solid fly ash (3.7) and washing liquid,
f) treating the first liquid fraction (LF1) obtained in step c) with alkali such as Ca(OH)₂ or NaOH (3.8-3.10) and/or a sulfide precipitating agent (3.11-3.13), to obtain a pH of from 9 to11, preferably from 9.5 to10.5 to precipitate heavy metal compounds and to obtain a brine, and
g) separating the precipitated heavy metals from the liquid phase of step f) into a brine (SB1, 3.14) and a solid fraction (HMF, 3.15)

The treated solid waste from step e) may be separated from the liquid component using e.g. a filter press, and the liquid component and the washing liquid may be returned to step a) to form the aqueous suspension. The filter cake resulting from the described separating step typically amounts to between 40 and 60 per cent of the dry weight of the ingoing fly ash or FGW-D, FGW-W, FGWF-D and/or FGWF-W, and can in most cases be landfilled according to EU-directive 2003/33/EF for disposal at local waste disposal sites for non-hazardous waste or hazardous waste, or may be used as a filler/cement replacement in concrete formulations. Adjustment of the pH of the liquid in step f) may be carried out using e.g. an alkaline metal hydroxide or an alkaline earth metal hydroxide such as Ca(OH)₂ or NaOH, and precipitation of heavy metals may further be spurred by addition of a sulfide or the like. The heavy metal-containing precipitate resulting from step f) is separated from the resulting brine using e.g. a filter press (3.10 and/or 3.13). The brine typically contains 5 to 15 per cent salts, and can be used as a road deicing agent or similar purposes or discharged into the sea in compliance with local effluent standards. The heavy metal precipitate may be recycled so that valuable metal contents such as Zn and Sb are exploited, or may be landfilled at a designated site.

The process of co-treatment is illustrated in figure 3:
Fly ash, FGW-D, FGW-W, FGWF-D and/or FGWF-W which can be wet, dry, or semi-dry is placed in a first reaction tank (3.1) together with reused water from a downstream washing step to form a suspension with a liquid to solid ratio (L₁::S₁) of from about 2 to about 15. A prescribed amount of spent acidic HCI scrubber liquid (HCLS) or another source of HCI is added to react with the fly ash, FGW-D, FGW-W, FGWF-D and/or FGWF-W and the pH is kept above 3. In the start of the treatment, pH may be above 7, but due to the continuous addition of acidic scrubber liquid or another acidic source during the prescribed time period, pH is controlled to obtain a final pH of not higher than 7 before the next step is initiated (step 3.5). The addition of HCLS is carried out with stirring over a period of from 10 to 90 or 15 to 90 minutes. The suspension is then passed through a sieve (3.2), whereby oversize particles (OS) larger than 0.1-1 mm are separated for return to the incinerator furnace. If necessary, the suspension is transferred to a second reaction tank (3.3), and pH is adjusted to between 3 and 5 by addition of HCLS. The suspension in the second reaction tank, may serve as a buffer suspension . The suspension can optionally be returned to the first reaction tank for storage. The first and the second reaction tank can be one and the same, in which case the suspension is pumped to a sieve to separate OS and returned to the same tank, or the suspension can be sieved to remove OS before the suspension is placed in first reaction tank (3.1).The first reaction tank (3.1), the second reaction tank (3.3) and the buffer tank (3.4) may also be replaced with one tank to serve all purposes.

Next, if necessary, the suspension is moved to a buffer tank (3.4), and additional washing water may be added to adjust the L:S ratio. Hereafter, the suspension is separated into a liquid (LF) and a solid fraction (SF) using a centrifuge (CE), a band filter, or a filter press (FP1). At this stage the pH typically is below 5, but above 3 to avoid precipitation of heavy metals. The solid fraction is washed in clean water in which pH will self-regulate or is adjusted to a pH between 7 and 11 at a solid-to-liquid ratio, L₂:S₂, of from 3 to 15, and the solid matter is then separated using e.g. a filter press or a band filter (3.7), resulting in treated fly ash or treated flue gas waste (X-FGW, 3.16) (named "X-RGA" in the priority application). The liquid fraction (LF) is transferred to a precipitation tank (3.8), and the pH is adjusted to 9.5 to 10 using an alkaline agent, such as NaOH or Ca(OH)₂ and precipitation of heavy metals may further be spurred by addition of a sulfide or the like. The precipitate is separated using a filter press (3.10), to form a heavy metal-rich end product (HMF, 3.15). The brine (SB1, 3.14) from the separation step is optionally transferred to a second precipitation tank (3.11), or to precipitation tank (3.8) for further alkaline treatment, and residual heavy metals are precipitated by the addition of a sulfide (3.11-3.13). The precipitate is separated using e.g. a filter press. The brine (SB1, 3.14) can be recycled, evaporated and used as road salt used or can be lead into a suitable recipient.

Central elements of the invention are illustrated in figure 8. Fly ash, FGW-D, FGW-W, FGWF-D and/or FGWF-W which can be wet, dry, or semi-dry is placed in a first reaction tank (3.1) optionally together with reused water from a downstream washing step (3.6) to form a suspension with a liquid to solid ratio (L₁:S₁) of from about 2 to about 15. A prescribed amount of spent acidic HCI scrubber liquid (HCLS) or another source of HCI is added to react with the fly ash, FGW-D, FGW-W, FGWF-D and/or FGWF-W and the pH is kept above 3. In the start of the treatment, pH may be above 7, but due to the continuous addition of acidic scrubber liquid or another acidic source during the prescribed time period, pH is controlled to obtain a final pH of not higher than 7 before the next step is initiated (step 3.5). In this next step the suspension is separated into a liquid (LF) and a solid fraction (SF) using a centrifuge (CE), a band filter, or a filter press (FP1). At this stage the pH typically is below 5, but above 3 to avoid any precipitation of heavy metals. The solid fraction is washed in clean water (3.6) in which pH will self-regulate or is adjusted to a pH between 7 and 11 at a solid-to-liquid ratio, L₂:S₂, of from 3 to 15, and the solid matter is then separated using e.g. a filter press or a band filter (3.7), resulting in treated fly ash or treated flue gas waste (X-FGW, 3.16). The liquid fraction (LF) is transferred to a precipitation tank (3.8), and the pH is adjusted to 9.5 to 10 using an alkaline agent, such as NaOH or Ca(OH)₂ and precipitation of heavy metals may further be spurred by addition of a sulfide or the like. The precipitate is sedimented (3.9) and separated using a filter press (3.10), to yield a brine (3.14) and heavy metal precipitate (3.15).

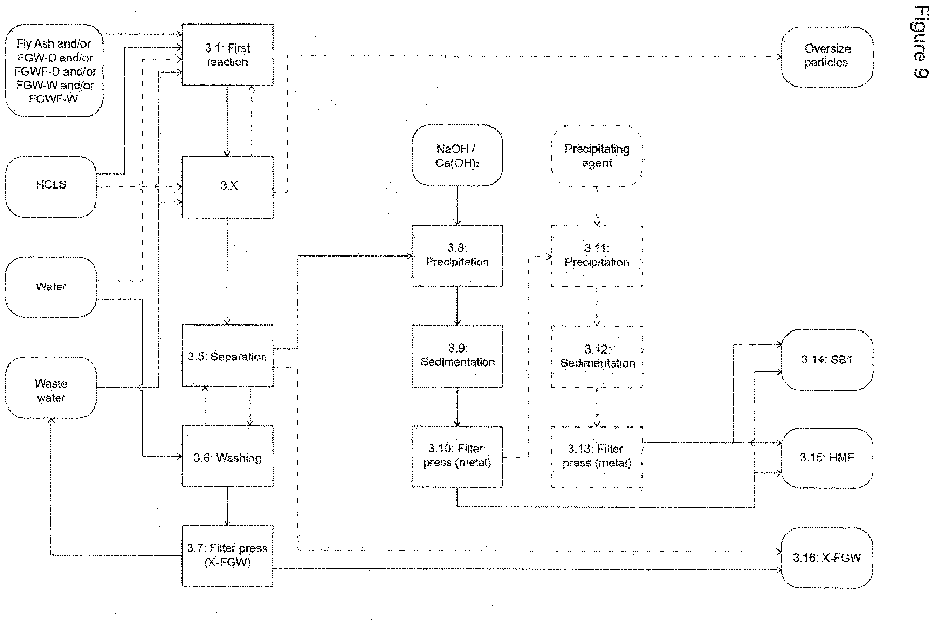

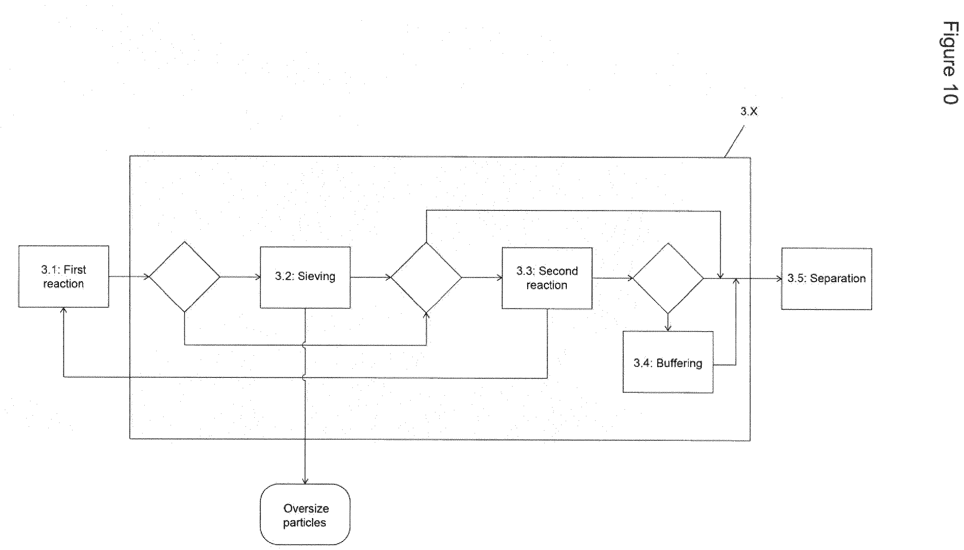

Further steps may be inserted into the above described process, as illustrated in figures 9 and 10. Fly ash, FGW-D, FGW-W, FGWF-D and/or FGWF-W which can be wet, dry, or semi-dry is placed in a first reaction tank (3.1) optionally together with reused water from a downstream washing step (3.6) to form a suspension with a liquid to solid ratio (L₁:S₁) of from about 2 to about 15. A prescribed amount of spent acidic HCl scrubber liquid (HCLS) or another source of HCI is added to react with the fly ash, FGW-D, FGW-W, FGWF-D and/or FGWF-W and the pH is kept above 3. In the start of the treatment, pH may be above 7, but due to the continuous addition of acidic scrubber liquid or another acidic source during the prescribed time period, pH is controlled to obtain a final pH of not higher than 7 before the next step is initiated. After step 3.1 step 3.X is entered (illustrated in figure 10 and described below). In step 3.5 the suspension is separated into a liquid (LF) and a solid fraction (SF) using a centrifuge (CE), a band filter, or a filter press (FP1). At this stage the pH typically is below 5, but above 3 to avoid any precipitation of heavy metals. The solid fraction is washed in clean water (3.6) in which pH will self-regulate or is adjusted to a pH between 7 and 11 at a solid-to-liquid ratio, L₂:S₂, of from 3 to 15, and the solid matter is then separated using e.g. a filter press or a band filter (3.7), resulting in treated fly ash or treated flue gas waste (X-FGW, 3.16). The liquid fraction (LF) is transferred to a precipitation tank (3.8), and the pH is adjusted to 9.5 to 10 using an alkaline agent, such as NaOH or Ca(OH)₂ and precipitation of heavy metals may further be spurred by addition of a sulfide or the like. The precipitate is sedimented (3.9) and separated using a filter press (3.10), to yield a brine (3.14) and heavy metal precipitate (3.15). The brine may, as illustrated in figure 9 be subject to further steps., A precipitating agent (such as TMT15) is added to the filtrate from the filter press (3.10) in order to precipitate more heavy metals (3.11); which are sedimentated (3.12) and the brine and the sediment is separated (3.13) to yield a brine (3.14) and a heavy metal precipitate (3.15), which may be combined with the heavy metal precipitate (3.15) and brine (3.14) of step 3.10.

Step 3.X as illustrated in figure 10 is between step 3.1 and step 3.5 and comprises a number of optional steps, either of which may be carried out or not. Thus, after the initial step 3.1 has been carried out as described above, it is decided whether the suspension is to be sieved for oversize particles (step 3.2), or whether sieving is bypassed. It is thereafter decided whether a second reaction, wherein the pH is adjusted to between 3 and 5 using HCLS (step 3.3) is to be carried out, or bypassed. If carried out, the suspension may be returned to step 3.1 or it may proceed in the method. Next, it is decided whether the suspension is to be stored for buffering, or whether it is to enter the separation step 3.5. It should be clear from this description that steps 3.2, 3.3, and 3.4. are optional and that the decision to carry out either may or may not be influenced by whether a previous step has been carried out, but that the suspension must pass from step 3.1. to step 3.5 with our without the optional steps in between. In figure 10 decision-making steps are illustrated by rhombuses

The whole or parts of the process may be carried out in the temperature interval between 10°C and 70°C.

One or more of the steps may be repeated, if necessary, as indicated by dotted lines in figure 3.

Preferably water is only taken in at step d) where it is used for washing the precipitate, after which it is sent to step a) for forming the initial suspension. The raw water may be tap water, but may also be e.g. condensation water from incineration plants due to lower costs. Depending on local regulations greywater may also be used if more cost efficient.

The inventors have surprisingly found that strict control of the reaction time between the fly ash FGW-D, FGW-W, FGWF-D and/or FGWF-W and HCLS, pH and the temperature allows for co-treatment of waste byproducts of waste incineration, as well as from e.g. combustion of coal or biomass, with a minimal water consumption, which process renders the byproducts less hazardous and allows for their recycling. The present invention allows for a simple treatment regime, wherein acidic scrubber liquid from a wet scrubber or another source does not need to be subject to a mercury separation step, and wherein all acidic components stem from the cleaning of flue gas using a scrubber, notably a wet scrubber. Compared to the art, the present invention relies only on solid or semi-solid waste in the form of fly ash, FGW-D, FGW-W, FGWF-D and/ or FGWF-W, acidic scrubber liquid (HCLS) from a wet scrubber; one or more alkaline agents for pH adjustment; optionally a sulfide for precipitation of heavy metals; and water, which may be greywater, tap water, or pure water. The present invention obtains a Zn, Pb, Cd, Sn, Cu and Sb-rich heavy metal concentrate, a brine, and treated fly ash, X-FGW-D, X-FGW-W, X-FGWF-D and/or X-FGWF-W that can be landfilled at local sites for nonhazardous waste or hazardous waste, or can be used e.g. in concrete formulations.

The unique characteristic of this invention is that at the pH value of the ingoing fly ash or FGW (> 10) most heavy metals are present as hydroxide complexes if put into an aqueous solution. It is very difficult to precipitate these heavy metals at such high pH value, even if sulfides are used. By using acidic waste water the pH value is controlled down to a pH < 7 where most heavy metal complexes and some minerals formed in the incineration which contain heavy metals will dissolve and can be precipitated when pH is increased again. Generally pH values below 3 should be avoided since silica compounds could form high viscosity gels and the buffer capacity of the fly ash or FGW is not retained. It is important to keep some buffer capacity, if the solid residue is to be landfilled or used in concrete. A simplified description of the pH changes during the process steps would be 12 to 4 to 7, and after separation to eg pH 9 or more.

The present invention allows for treatment of waste incineration byproducts, such that the treated waste makes up 60 per cent or less of the dry weight of the ingoing fly ash. Importantly, the treated fly ash is much less prone to leaching of halogens and heavy metals, and can thus be landfilled in a less restricted manner, or may be further processed and used in e.g. concrete formulations. The treated fly ash retains sufficient residual alkali and cementitious properties to be useful in such concrete formulations. An exemplary use is for a mixture of treated waste material (X-FGW) and cement, wherein the concentration of X-FGW is at the most 30% w/w. Another exemplary use is for a mixture wherein the concentration of X-FGW is from about 0.5 to 10% w/w of the cement including the X-FGW content.

Use of the invention also results in a heavy metal-rich fraction, which can be landfilled or recycled, and brine that can be released into the ocean in a safe manner, used directly as liquid road salt, or forms the basis for e.g. road deicing products.

### Definitions

Flue gas waste (FGW): FGW refers to the waste byproducts that result from cleaning of flue gas from e.g. an incineration plant. Depending on the cleaning process used the FGW may be dry, semi-dry (commonly denoted FGW-D) or wet (denoted FGW-W). Fly ash is the dry solid that may be mixed with neutralization products from acidic scrubbers to form wet FGWF-W, or fly ash may be mixed with waste from the dry or semi-dry scrubber to form FGWF-D. Accordingly, X-FGW denotes the treated flue gas waste.

Acidic scrubber liquid: Acidic scrubber liquid is formed when hydrochloric acid gas present in the flue gas is dissolved in water. In the present invention acidic scrubber liquid from a hydrochloric acid scrubber is used (HCLS), but another source of HCI may equally be used.

Bottom ash: The fraction of ash from an incineration process, that remains in the incinerator. Bottom ash is usually non-hazardous and can be landfilled relatively unrestrictedly, or may be used e.g. in construction or road work.

Fly ash: The fraction of ash from an incineration process, which is relatively volatile and tends to remain, entrained in the flue gas. Fly ash is commonly captured by means of e.g. cyclones, electro filters or bag filters.

Heavy metals: the present invention is able to remove heavy metals from wet or dry FGW, fly ash and HCLS and produce a heavy metal rich product, which can be landfilled or recycled for its valuable contents. Heavy metals that are present in incineration waste products include Zn, Cd, Cu, Hg, Pb, and Sb.

Halogens: chlorides, bromides, fluorides, and iodides.

The invention will now be explained further in experimental details with reference to the examples and a drawing, wherein
Figure 1 shows a flow-diagram of the process, whereby flue gas is treated in a dry or semi-dry flue gas treatment process. The dotted lines indicates possible, but not mandatory routes.
Figure 2 shows a flow-diagram of the process, whereby flue gas is treated in a wet flue gas treatment process. The dotted lines indicates possible, but not mandatory routes.
Figure 3 show a flow-diagram of a process of the invention. The dotted lines indicates possible, but not mandatory routes.
Figures 4-7 show the results of the experiments reported in Example 3. Please note that "byggcement" is Swedish construction cement, FA is fly ash and "Anl-cement" is Swedish civil engineering cement ("anläggningscement").
Figure 8 shows a flow diagram of a process of the invention. Dotted lines are possible, but not mandatory lines.
Figure 9 shows a flow diagram of a process of the invention. Dotted lines are possible, but not mandatory lines. Step 3.X is further illustrated in figure 10.
Figure 10 shows the optional steps and decision-making points of step 3.X.

### Summary of experimental observations

A comprehensive analytical program on treatment of both "wet" FGW and "semi-dry" FGW has been performed. The main purpose was to obtain documentation on whether the products from the process of the invention, X-FGW, salt product (SP2) and heavy metal product (HMP) could be recycled and if so, how these products should be handled.

The analytical program included chemical analysis of the feed materials wet FGW, semi-dry FGW, scrubber liquid and the products from the process X-FGW, OS (over sizes) salt product (SP2) and heavy metal product (HMP). Furthermore batch leaching tests (L:S=10) and column leaching tests (L:S=0.1, L:S=2 and L:S=10) on the product X-FGW have been performed.

### Description of the tests

Wet FGW (fly ash) samples from Incineration plant A were collected over a period of 16 weeks. Semi-dry FGW samples were collected from Incineration plant B over a period of 5 months. Incineration plant B had just before the Semi-dry FGW sampling rebuilt the internal semi-dry FGW handling system in order to be able to recycle some of their semi-dry FGW.

A pilot plant was commissioned in order to carry out the following tests. In total 64 pilot plant tests were performed. In summary 32 pilot plant tests were performed with wet FGW (fly ash) from Incineration plant A and 32 pilot plant tests were done with semi-dry FGW from Incineration plant B. Acidic scrubber liquid from Incineration plant A was used during all 64 trials.

The 32 tests treating either wet FGW (fly ash) or semi-dry FGW was split into 16 trials operating at "high salt (low L:S)" concentration in the SP brine (operation form A) and 16 trials operating at "low salt (high L:S)" concentration in the SP brine (operation form B). Each of the 16 trials was again divided into 2 times 8 trials operating at similar process operating conditions. When wet FGW (fly ash) or semi-dry FGW were treated four collective samples of all products X-FGW, HMP, SP1 operating form A, SP2 operating form A, SP1 operating form B, SP2 operation form B including 2-3 collective samples OS (material > 1 mm grain size, that is removed in the process).

All solid or liquid samples from the trials with both wet FGW (fly ash) and semi-dry FGW were analyzed at accredited external laboratories for their basic chemical composition. Batch leaching tests and column leaching tests with feed materials FGW (fly ash), semi-dry FGW and products X-FGW were performed at an accredited external laboratory.

### Results: material amounts

The amount of Wet FGW send to disposal from Incineration plant A is about 17,000 ton/yr. including the water content. Results from tests co-treating FGW (fly ash) and acidic scrubber liquid have shown that the treated amount (X-FGW) can be reduced by about 39% to 10,460 ton/yr including the water content.

From the treatment trials of semi-dry FGW from Incineration plant B the reduction in the X-FGW amount for disposal is about 53% on a dry matter basis or about 40% including the water content compared to semi-dry FGW from Incineration plant B.

### Results: disposal

In EU-directive 2003/33/EF describing criteria and procedures for receiving waste at waste disposal sites waste can be characterized as inert waste (IW), non-hazardous waste (NHW) or hazardous waste (HW).

All batch leaching tests using X-FGW from the treatment of both wet FGW (fly ash) from Incineration plant A and semi-dry FGW from Incineration plant B have shown that all substance leaching results from X-FGW were in compliance with current limit values for disposal of the X-FGW material on disposal sites class NHW according to EU-directive 2003/33/EF.

Column leaching tests using X-FGW from Incineration plant A has shown that all substance leaching results were in compliance with current limit values for disposal of the X-FGW material on disposal sites class HW according to EU-directive 2003/33/EF The measured leaching values for antimony were only slightly above the NHW limit value for leaching of antimony at L:S=10 whereas all other values were within NHW limits . Column leaching tests using X-FGW from high salt (operation form A) treatment of semi-dry FGW from Incineration plant B have shown that all substance leaching results were in compliance with current limit values for disposal of the X-FGW material on disposal sites class HW according to EU-directive 2003/33/EF. The measured leaching values for antimony were slightly above the NHW limit value for antimony at L:S=2 and L:S=10, whereas all other values were within NHW limits.

Column leaching tests using X-FGW from low salt (operation form B) treatment of semi-dry FGW from Incineration plant B have shown that all substance leaching results were in compliance with current limit values for disposal of the X-FGW material on disposal sites class HW according to EU-directive 2003/33/EF. A measured leaching value for mercury was slightly above the NHW limit value for mercury at L:S=2. The Antimony leaching is in this case in compliance with the limit value for disposal of the X-FGW material on disposal sites class IW according to EU-directive 2003/33/EF.

### Results: salt

The amount of salt product SP2 formed by the present treatment of wet FGW (fly ash) from Incineration plant A is about 30% of the wet FGW (fly ash). The amount of salt product SP2 from the present treatment of semi-dry FGW from Incineration plant B is about 50% of the semi-dry FGW. The higher salt amount is caused by the higher chloride content in the semi-dry FGW and that the surplus lime present in semi-dry FGW requires more acidic scrubber liquid compared to wet FGW (fly ash).

### Composition: salt

The composition of the brine product is a mixture of at least three salts. The salts are formed from both the wet FGW (fly ash), the semi-dry FGW and the acidic scrubber liquid. Around 99% of the brine mixture is the three salts sodium chloride, calcium chloride and potassium chloride. About 0.5 - 1% of the brine mixture is calcium sulfate and magnesium sulfate. Salt specifications for the composition of salt brine product SP2 including trace elements have been made.

### Reuse/application: salt

Considering the SP2 salt compositions it is possible to operate the process according to the present invention at both operating forms A or B when it is required. The brine product SP2 may therefore be used as road salt provided that there is a market for the (liquid) road salt and that adequate storage capacity is available. In periods where road salt is not required (in the summer period) the process according to the invention can be switched to operation form B.

### Results: heavy metal product

The amount of heavy metal product (HMP) dry matter from treatment of wet FGW from Incineration plant A is about 2.8% of the FGW (fly ash). Including the water content the HMP amount is about 9% of the FGW (fly ash). The HMP product has a high zinc content up to 38% to 40%.

A technical, economic and environmental assessment has concluded that the heavy metal product (HMP) from wet FGW (fly ash) should be sent to a zinc recovery plant for zinc metal recovery. It is both technically and economically feasible to wash and dry the HMP filter cakes in order to achieve a high zinc content in the HMP product (38% to 40%).

The HMP from the present treatment of semi-dry FGW from Incineration plant B has a much lower zinc content and therefore the HMP should be handled together with X-FGW.

### Results: oversize material

During the present treatment of FGW (fly ash) or semi-dry FGW small amounts of material having a grain size > 1 mm (OS material) are produced. The OS material is about 0.5% of both wet FGW (fly ash) and semi-dry FGW. A high total organic carbon (TOC) content > 5% has been measured in the OS material from wet FGW (fly ash).

Therefore the OS material should be handled by returning the OS material to the incineration plant furnace(s) in order to reduce the TOC content. The OS material coming from semi-dry FGW should be handled the same way by returning the OS material to the incineration plant furnace(s).

### Economy summary

Co-treatment of wet FGW (fly ash) and scrubber liquid make it possible to recover both salts and Zinc from incineration plants using wet flue gas cleaning systems. Up to 35% to 40% of the wet FGW (fly ash) incl. the acidic scrubber liquid can be recovered. For co-treatment of semi dry FGW and acidic scrubber liquid up to 50% to 55% of the semi-dry FGW can be recovered (salts).

Recovery of X-FGW as an additive in concrete may be technically possible, cf the examples herein. Economic and environmental savings from the recovery of zinc and the recycling of salts are possible.

Furthermore direct economic savings on the treatment of wet FGW (fly ash) or semi-dry FGW and scrubber liquid of 30% to 40% seems feasible.

### Examples

### Example 1: Plant A (tests no. VF09-16)

The method of the invention was tested using fly ash from a flue gas cleaning plant using a wet scrubber method at Incineration plant A.

In total 8 batches were tested with identical conditions. Washing liquid was added (3.1) to the fly ash to obtain a liquid/solid ratio, L₁:S₁, of 4.5 after addition of HCLS. The HCLS contained 7.5% to 8.2 % HCI. A total of 75.6 kg of fly ash and 116 L HCLS were used in the test. In batches no. VF09-16 the liquid and the solid material were separated using a centrifuge (3.5), and after the washing step (3.6), the separation step (3.7) was by means of a filter press.

Results example 1:

### Treated fly ash. X-FGW, according to the present invention

- Dry matter, reduction VF09-16: 37.1%
- pH of X-FGW = 9.8
- Column leaching (16 parameters)

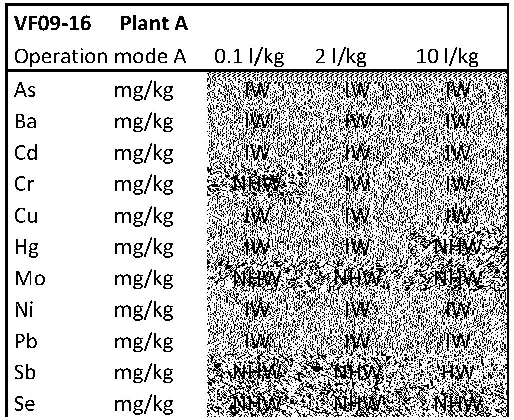

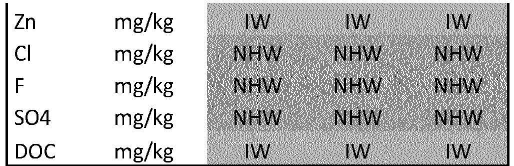

*Measured values compared to "limit values" for X-FGW disposal at different types of landfills (IW, NHW and HW) for batches VF09-16 (operating mode A).*

### Salt product

- Salt content (in % of fly ash): 26%. (Salt concentration SP2: 9.3%).
- Salt composition

| **Salt SP2 Plant A** | | |
|---|---|---|
| **Operation mode A** | | SP2 VF09-16 |
| Salts (CaCl₂,NaCl,KCl) | % (w/w) | 99 |
| Salts (CaSO₄,MgSO₄) | % (w/w) | 0.5-1 |
| Arsenic, dissolved | As ppm | 0.04 |
| Barium, dissolved | Ba ppm | 20.0 |
| Cadmium , dissolved | Cd ppm | 0.03 |
| Chromium , dissolved | Cr ppm | 0.01 |
| Copper, dissolved | Cu ppm | < 0.01 |
| Mercury, dissolved | Hg ppm | 0.00 |
| Molybdenum, dissolved | Mo ppm | 0.92 |
| Nickel, dissolved | Ni ppm | < 0.01 |
| Lead, dissolved | Pb ppm | 0.01 |
| Antimony, dissolved | Sb ppm | 0.30 |
| Selen dissolved | Se ppm | 0.20 |
| Zinc, dissolved | Zn ppm | 0.21 |

| From CEN TC337 for De-Icing agents. | | | VF09-16 |
|---|---|---|---|
| | De-Icing agents | | Saltproduct SP2-VF |
| Sulphate Type 1 | max. 1.5% | Sulphate(*) | 0.5-1% (w/w) |
| Sulphate Type 2 | max. 3.0% | | |
| Anti Caking agent mg/kg TS | 2-125 | | |
| NB: som (Fe(CN)6-anion) | 2-125 | | |
| | | | Saltprodukt SP2-VF |
| Soluble Heavy metals | max Limit mg/kg TS | | mg/kg TS |
| Al | 50 | | 0.03 |
| As | 2.5 | | 0.01-0.05 |
| Cd | 2 | | 0.03-0.9 |
| Cr | 5 | | 0.02-0.03 |
| Cu | 5 | | < 0.01 |
| Hg | 0.5 | | < 0.01 |
| Ni | 5 | | < 0.01 |
| Pb | 5 | | < 0.01 |
| Zn | 20 | | 0.1-0.3 |
| Co | 2 | | 0.02 |
| Hydrocarbons | 100 | | <20 (DOC) |
| | | (*) as CaS04, Mg S04 | |

From the table above it is seen that the salt product obtained meet the maximal limits for soluble metals according to CEN TC337 for "de-Icing Agents".

### Heavy metal product (HMP)

- HMP concentration: 3.4% based on amount of fly ash in the starting material. Measured content of zinc 31%.

### Over sizes

- Over sizes - concentration: 0.1% based on amount of fly ash in the starting material. Measured total organic carbon 74,000 mg/kg of total solids (TS)

### Example 2: Plant A (tests no. VF17-24)

The method of the invention was tested using fly ash from a flue gas cleaning plant using a wet scrubber method at Incineration plant A.

In total 8 batches were tested with identical conditions. Washing liquid was added (3.1) to the fly ash to obtain a liquid/solid ratio, L₁:S₁, of 8 after addition of HCLS. The HCLS contained 2.6% to 2.8% HCI. A total of 75.6 kg of fly ash and 290 L HCLS were used in the test. In batches no. VF17-24 the liquid and the solid material were separated using a centrifuge (3.5), and after the washing step (3.6), the separation step (3.7) was by means of a filter press.

### Results example 2:

### Treated fly ash X-FGW

- Dry matter, reduction VF17-24: 40%
- pH of X-FGW = 8.7
- Column leaching (16 parameters)

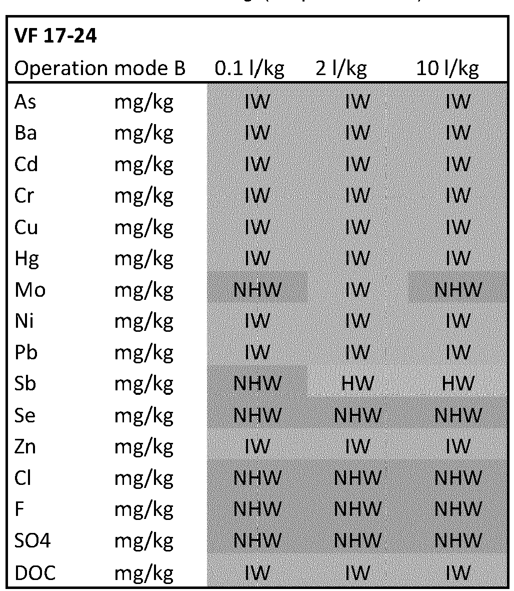

*Measured values compared to "limit values" for X-FGW disposal at different types of landfills (IW, NHW and HW) for batches VF17-24 (operating mode B).*

### Salt product (effluent)

- Salt concentration (in % of fly ash): 31%. (Salt concentration SP2: 3.9%)
- Salt composition

| **Salt SP2 Plant A** | | |
|---|---|---|
| **Effluent (operation mode B)** | | SP2 VF17-32 |
| Antimony (Sb), dissolved | mg/l | 0.076 |
| Arsenic (As), dissolved | µg/l | 9.2 |
| Barium (Ba), dissolved | mg/l | 0.5 |
| Lead (Pb), dissolved | mg/l | 0.0039 |
| Cadmium (Cd), dissolved | mg/l | 0.063 |
| Calcium (Ca), dissolved | mg/l | 9,200 |
| Chloride,filtrered | mg/l | 24,000 |
| Chromium (Cr), dissolved | µg/l | 3.9 |
| Potassium (K), dissolved | mg/l | 2500 |
| Copper (Cu), dissolved | µg/l | 2.1 |
| Mercury (Hg), dissolved | mg/l | < 0.00005 |
| Magnesium (Mg), dissolved | mg/l | 190 |
| Molybdenum (Mo), dissolved | mg/l | 0.22 |
| Sodium (Na), dissolved | mg/l | 2,700 |
| Nickel (Ni), dissolved | µg/l | 27 |
| Selen (Se), dissolved | mg/l | 0.015 |
| Sulfate, filtrered | mg/l | 640 |
| Zinc (Zn), dissolved | mg/l | 0.023 |

### Heavy metal product (HMP)

### HMP amount: 4.9%. Measured content of zinc 33%.

### Over sizes

- Over sizes: 0.63%. Measured total organic carbon 44,000 mg/kg total solids (TS)

### Example 3: Plant A (tests no. VF25-32)

The method of the invention was tested using fly ash from a flue gas cleaning plant using a wet scrubber method at Incineration plant A.

In total 8 batches were tested with identical conditions. Washing liquid was added (3.1) to the fly ash to obtain a liquid/solid ratio, L₁:S₁, of 8 after addition of HCLS. 75.6 kg fly ash and 113L HCLS were used in the test. The HCLS contained 7.5% to 8.2% HCI. In batches no. VF25-32 the liquid and the solid material were separated using a centrifuge (3.5), and after the washing step (3.6), the separation step (3.7) was by means of a filter press. Tests were made with mixtures of treated fly ash and concrete blends.

### Results example 3:

### Treated flv ash X-FGW

- Dry matter, reduction VF25-32: 40.3%
- pH of X-FGW = 9.0
- Column leaching (16 parameters)

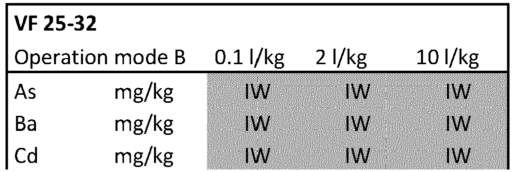

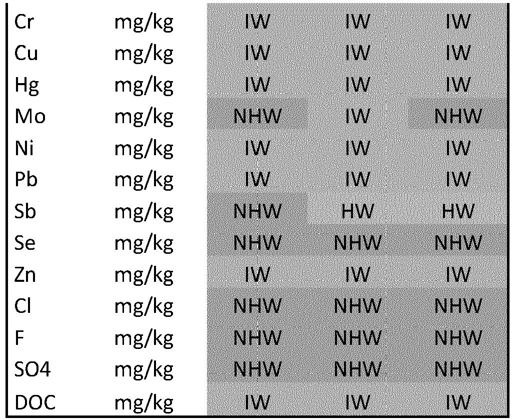

*Measured values compared to "limit values" for X-FGW disposal at different types of landfills (IW, NHW and HW) for batches VF25-32 (operating mode B).*

### Cement reaction tests VF 25-32

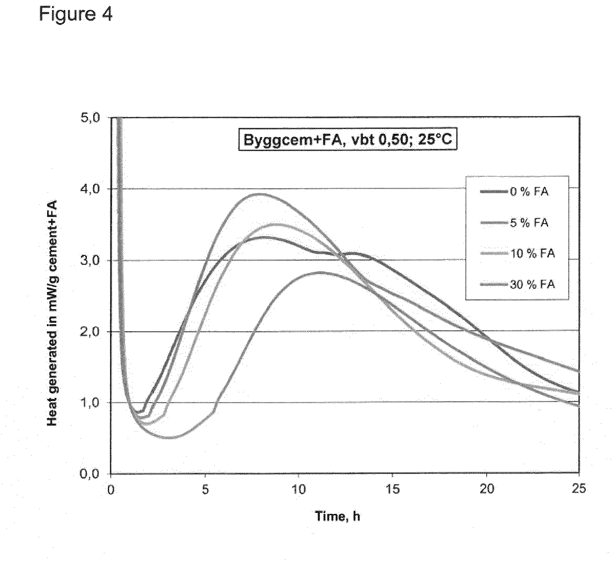

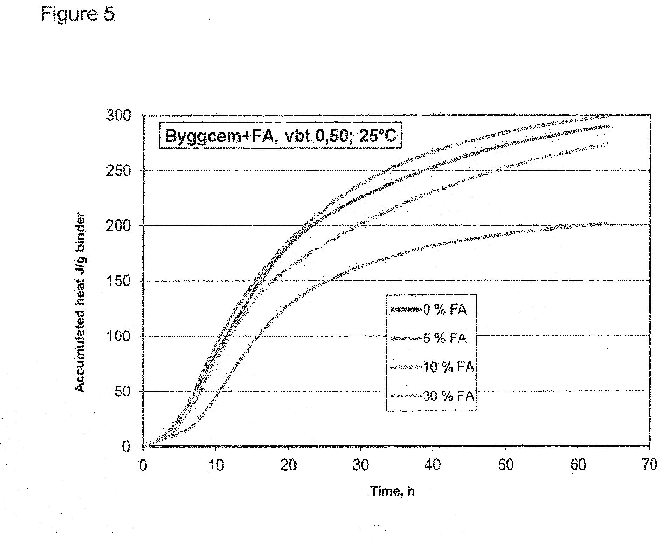

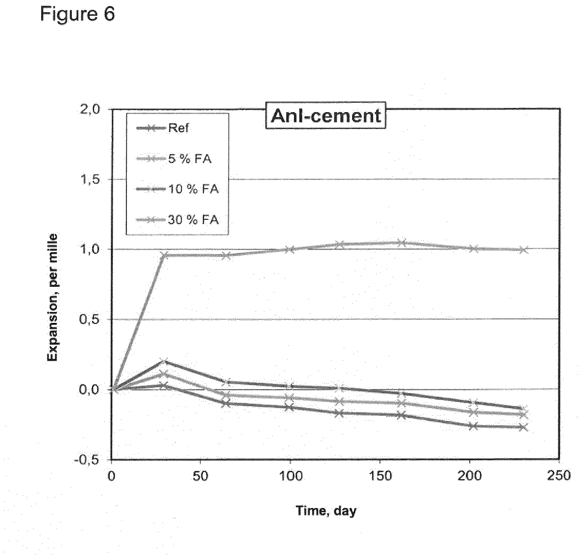

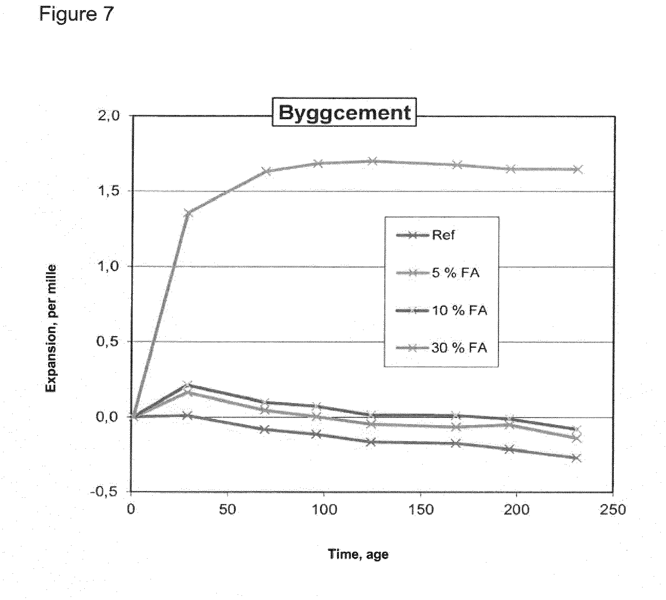

Conditions: Swedish construction cement ("byggcement") and Swedish civil engineering cement ("anläggscement") were used. X-FGW = FA.in figures 4 to 7. "The amounts of (X-FGW) added were: 0% (Reference) - 5%X-FGW, 10% X-FGW and 30% X-FGW based on total amount of "cement+X-FGW". Figures 4 to 7 show the results of the tests.

Swedish "construction cement" was used for calorimetry. Construction cement paste having a binder number of 0.5 was used and the temperature was 25°C. The calorimetry apparatus was a TAM-Air isotherm meter. Both "construction cement" and "civil engineering cement" were used in swelling studies. A standard cement mortar was made using water-concrete number of 0.5 and the ratio between cement (binder) and norm sand was 1:3. Prisms with dimensions 40 x 40x 160 mm were cast and used in the expansion tests.

Results: A weak accelerating effect with 5%X-FGW, a weak decelerating effect with 10%X-FGW, a strong decelerating effect on cement reactions. Based on the heat generation figures concrete strength will not be affected by addition of 5% or 10%X-FGW. By addition of 30% X-FGW a lower strength of the concrete can be foreseen.

### Concrete expansion tests:

Conditions: Both Swedish "construction cement" and "civil engineering cement" were used. A standard cement mix having a water-cement number of 0.5 and a cement to norm sand ratio of 3 was used. Test samples were 40x40x160 mm. The test period was 8 months.

Results: Expansion occurs within 28 days (beginning of hydration). 5% X-FGW and 10% X-FGW gives a week expansion followed by week crimping for both cement types. 30% X-FGW gives a strong expansion which stabilizes on a high level for both cement types.

Mixing of 5-10% X-FGW with Swedish "construction cement" or Swedish "civil engineering cement" will not cause a harmful expansion (measured expansion was about 0.025%) in water stored samples(*)
*(*) From testing sulfate resistance (ASTM C1012) there is an upper limit to swelling*/*(expansion) of 0.1% after 6 months for* a *cement with a moderate sulfate resistance (Type II) and 0.05% for* a *cement with high sulfate resistance (Type V).*

### Salt product (effluent)

- Salt concentration (in % of fly ash): 30.2%. (Salt concentration SP2: 3.8%)

### Salt composition

| **Salt SP2 Plant A** | | |
|---|---|---|
| **Effluent (operation mode B)** | | SP2 VF17-32 |
| Antimony (Sb), dissolved | mg/l | 0.076 |
| Arsenic (As), dissolved | µg/l | 9.2 |
| Barium (Ba), dissolved | mg/l | 0.5 |
| Lead (Pb), dissolved | mg/l | 0.0039 |
| Cadmium (Cd), dissolved | mg/l | 0.063 |
| Calcium (Ca), dissolved | mg/l | 9,200 |
| Chloride, filtrered | mg/l | 24,000 |
| Chromium (Cr), dissolved | µg/l | 3.9 |
| Potassium (K), dissolved | mg/l | 2500 |
| Copper (Cu), dissolved | µg/l | 2.1 |
| Mercury (Hg), dissolved | mg/l | < 0.00005 |
| Magnesium (Mg), dissolved | mg/l | 190 |
| Molybdenum (Mo), dissolved | mg/l | 0.22 |
| Sodium (Na), dissolved | mg/l | 2,700 |
| Nickel (Ni), dissolved | µg/l | 27 |
| Selen (Se), dissolved | mg/l | 0.015 |
| Sulfate, filtrered | mg/l | 640 |
| Zinc (Zn), dissolved | mg/l | 0.023 |

- Heavy metal product amount HMP: 3.8%. Measured content of zinc 25%.
- Over sizes amount: 0.45%. Measured total organic carbon 31,000 mg/kg total solids (TS)

### Example 4: Plant B (tests no. AF09-16)

The method of the invention was tested using fly ash from a flue gas cleaning plant using semi-dry FGW from Incineration plant B and acidic scrubber liquid from Incineration plant A.

In total 8 batches were tested with identical conditions. Washing liquid was added (3.1) to the fly ash to obtain a liquid/solid ratio, L₁:S₁, of 5.2 after addition of HCLS. 38.4 kg fly ash and 138 L HCLS were used in the test. The HCLS contained 7.5% to 8.2% HCI. In batches no. AF09-16 the liquid and the solid material were separated using a centrifuge (3.5), and after the washing step (3.6), the separation step (3.7) was by means of a filter press.

### Results example 4:

### Treated flv ash X-FGW

- Dry reduction AF09-16: 52.6%
- pH of X-FGW = 9.8
- Column leaching (16 parameters)

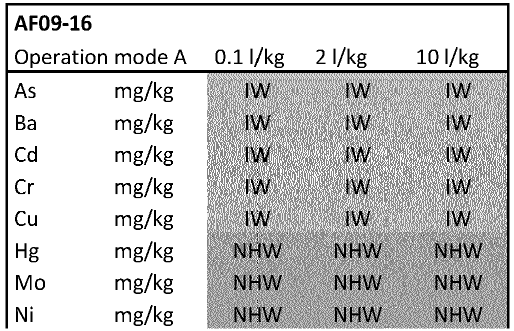

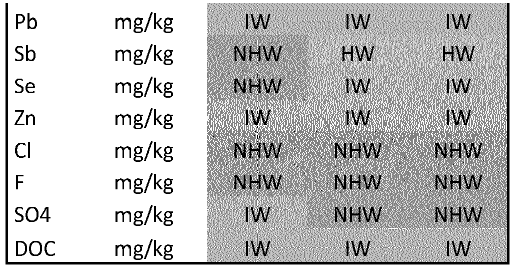

*Measured values compared to "limit values" for X-FGW disposal at different types of landfills (IW, NHW and HW) for batches AF09-16 (operating mode A).*

### Salt product

• Salt concentration (in % of fly ash): 65.2%. (Salt concentration SP2: 13.4%) Salt composition

| **Salt product SP2 Plant B** | | |
|---|---|---|
| **Operation mode A** | | |
| Name | | SP2 AF09-16 |
| Salts (CaCl₂,NaCl,KCl) | % (w/w) | 99 |
| Salts (CaSO₄,MgSO₄) | % (w/w) | 0.5-1 |
| Arsenic, dissolved | As ppm | < 0.01 |
| Barium, dissolved | Ba ppm | 64.6 |
| Cadmium , dissolved | Cd ppm | 1.08 |
| Chromium, dissolved | Cr ppm | 0.02 |
| Copper, dissolved | Cu ppm | 0.12 |
| Mercury, dissolved | Hg ppm | 0.005 |
| Molybdenum, dissolved | Mo ppm | 2.1 |
| Nickel , dissolved | Ni ppm | < 0.01 |
| Lead, dissolved | Pb ppm | 0.06 |
| Antimony, dissolved | Sb ppm | 4.7 |
| Selen, dissolved | Se ppm | 0.15 |
| Zinc, dissolved | Zn ppm | 0.32 |

| From CEN TC337 for De-Icing agents. | | | AF 09-16 |
|---|---|---|---|
| | De-Icing agents | | Saltproduct SP2-AF |
| Sulphate Type 1 | max. 1.5% | Sulphate(*) | 0.5-1 % (w/w) |
| Sulphate Type 2 | max. 3.0% | | |
| Anti Caking agent mg/kg TS | 2-125 | | |
| NB: som (Fe(CN)6-anion) | 2-125 | | |
| | | | Saltproduct SP2-AF |
| Soluble Heavy metals | max Limit mg/kg TS | | mg/kg TS |
| Al | 50 | | 0.03 |
| As | 2.5 | | < 0.01 |
| Cd | 2 | | 0.5-1.1 |
| Cr | 5 | | 0.02-0.06 |
| Cu | 5 | | 0.01-0.15 |
| Hg | 0.5 | | 0.005 |
| Ni | 5 | | < 0.01 |
| Pb | 5 | | 0.06 |
| Zn | 20 | | 0.3-0.7 |
| Co | 2 | | 0.015-0.03 |
| Hydrocarbons | 100 | | < 30 (DOC) |
| | | (*) as CaSO4, Mg SO4 | |

• Heavy metal product amount (HMP): 5.4%. Measured content of zinc 3.9%
• Over sizes amount: 0.45%. Measured total organic carbon 7,800 mg/kg total solids (TS)

### Example 5: Plant B (tests no. AF17-24)

The method of the invention was tested using fly ash from a flue gas cleaning plant using semi-dry FGW from Incineration plant B and acidic scrubber liquid from Incineration plant A.

In total 8 batches were tested with identical conditions. Washing liquid was added (3.1) to the fly ash to obtain a liquid/solid ratio, L₁:S₁, of 15 after addition of HCLS. 26 kg fly ash and 197 L HCLS were used to the test. The HCLS contained 2.6 to 2.8% HCI. In batches no. AF17-24 the liquid and the solid material were separated using a centrifuge (3.5), and after the washing step (3.6), the separation step (3.7) was by means of a filter press.

Results example 5:

### Treated flv ash X-FGW

- Dry matter reduction AF17-24: 50.0%. pH of X-FGW = 10.5
- Column leaching (16 parameters)

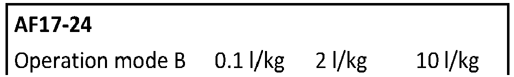

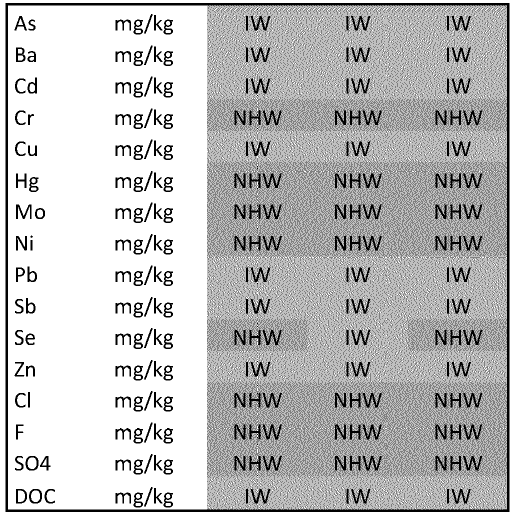

*Measured values compared to "limit values" for X-FGW disposal at different types of landfills (IW, NHW and HW) for batches AF17-24 (operating mode B).*

### Salt product

- Salt concentration (in % of fly ash): 70.6% (Salt concentration SP2: 4.9%) Salt composition

| **Salt SP2 Plant B** | | |
|---|---|---|
| **Effluent (operation mode B)** | | SP2 AF17-24 |
| Antimony (Sb), dissolved | mg/l | 1.1 |
| Arsenic (As), dissolved | µg/l | <0.8 |
| Barium (Ba), dissolved | mg/l | 4.5 |
| Lead (Pb), dissolved | mg/l | 0.0019 |
| Cadmium (Cd), dissolved | mg/l | 0.0008 |
| Calcium (Ca), dissolved | mg/l | 14,200 |
| Chloride, filtrered | mg/l | 34,000 |
| Chromium (Cr), dissolved | µg/l | 13 |
| Potassium (K), dissolved | mg/l | 2,100 |
| Copper (Cu), dissolved | µg/l | <1.0 |
| Mercury (Hg), dissolved | mg/l | < 0.00005 |
| Magnesium (Mg), dissolved | mg/l | 25 |
| Molybdenum (Mo), dissolved | mg/l | 0.27 |
| Sodium (Na), dissolved | mg/l | 2,500 |
| Nickel (Ni), dissolved | µg/l | < 1.0 |
| Selen (Se), dissolved | mg/l | 0.013 |
| Sulfate, filtrered | mg/l | 920 |
| Zinc (Zn), dissolved | mg/l | <0.005 |

### Heavy metal product (HMP)

### HMP amount: 4.6%. Measured content of zinc 5.7%.

### Over sizes

- Over sizes amount: 1.0%. Measured total organic carbon 4,000 mg/kg total solids (TS)

### Example 6: Properties of concrete with 10% cement replacement by X-FGW and reduced HCLS use

The method of the invention was carried out in a series of tests wherein the amount of HCLS was varied. Briefly, titrations were carried out to determine the amount necessary to obtain a pH of 7, and fractions of said amount of HCLS was used in the process. The X-FGW from the fly ash treatment with 95% of the calculated HCLS amount is denoted ("low pH"), and the X-FGW from the fly ash treatment with 80% of the calculated HCLS amount is denoted "high pH". In all tests the pH in the separation step (3.5 of figure 3) was kept above 3 but below 5. The resulting treated fly ash (X-FGW) was used to produce concrete. Concrete tests were carried out.

In an alternative configuration of the invention it is possible to adjust the cement properties of X-FGW in order to facilitate its use in concrete. As mentioned above, this is done by adjusting the amount of HCLS and thus also the cementitious properties of the treated fly ash (X-FGW). In the tests, two cases are presented, a low pH (about 95% HCLS used), a higher pH (about 80% HCLS used) and a reference case. In the tests, the compressive strength of concrete cubes is evaluated according to standards SS-EN 197-1:2016 and SS-EN 450-1:2012 in an accredited lab. The reference cement is CEM II/ A-LL 42.5 R (Byggcement Skövde). For both cases, the low pH and the higher pH, 10% (dry basis) of the reference cement is replaced by X-FGW. It should be noted that the tests deviated from the standards with respect to the moisture content of the cement replacement. As it is likely that in an industrial application the X-FGW will not be dried the X-FGW was added, as received from the invented process. The moisture content was determined to be about 40% in both cases.

The table below presents the compressive strengths (in MPa) of the three different cases after 2, 7 and 28 days. The general trend is that higher pH used in the invented process will facilitate the use of X-FGW in concrete.

Table The compressive strengths (in MPa) of concrete cubes with CEM II/ A-LL 42.5 R cement and two cases (low pH and high pH) 10% of the cement is replaced by X-FGW.

| | 2 Days | 7 Days | 28 Days |
|---|---|---|---|
| CEM II/ A-LL 42.5 R | 36.0 | 47.6 | 54,7 |
| 10% X-FGW (low pH) | 26.6 | 34.4 | 39,8 |
| 10% X-FGW (high pH) | 30.8 | 40.7 | 48,1 |

The strength development of the concrete cubes with 10% cement replacement by X-FGW are within typical strength development characteristics of different pozzolani cement mixtures.

**Table Activity index %**

| | 2 Days | 7 Days | 28 Days |
|---|---|---|---|
| CEM II/ A-LL 42.5 R | 100 | 100 | 100 |
| 10% X-FGW (low pH) | 73,9 | 72,3 | 72,8 |
| 10% X-FGW (high pH) | 85,6 | 85,5 | 87,9 |

The Activity Index table shows that the cementitious properties of X-FGW can be increased by the method described. According to EN450-1:2005 for coal fly ash in concrete the 28 days activity index must be above 75% at 25% coal fly ash addition. Replacement of 5-10% cement by X-FGW as described in this example is feasible.

## Claims

1. A method of treating heavy metal and halogen salt-containing solid waste material mainly from flue gas cleaning systems, the method comprising
i) treating said solid waste material with acidic scrubber liquid to obtain a suspension with a pH of from 3 to 7 in the liquid phase,
ii) separating solid and liquid material obtained in step i),
iii) treating the solid material from step ii) with water to obtain a pH in the aqueous phase ranging from about 7 to about 11 followed by separation of the thus washed solid material from the liquid to obtain treated solid waste,
iv) treating the liquid material from step ii) with one or more alkaline agent(s) and/or sulfides to obtain a pH of from about 9 to 11 to precipitate heavy metals,
v) optionally, separating the heavy metals from step iv) from the liquid to obtain a heavy metal fraction and a halogen salt solution,
wherein pH in step i) initially is from about 11 to about 13 and then gradually decreases to a pH of from 3 to 4 over a period of from 15 to 90 minutes as the scrubber liquid is added and reacts with the waste.

2. A method according to claim 1, wherein the solid waste material is a fly ash containing waste material.

3. A method according to claim 1 or 2, wherein step i) is carried out in an extraction tank such that the liquid phase of the suspension is kept at a pH above 3 but below 7, wherein the weight ratio between the liquid and the waste material, the L:S ratio, is from 2 to 15.

4. A method according to any one of claims 1-3 optionally comprising a step between step i) and step ii), wherein the optional step comprises sieving the suspension obtained in step i) to remove solid material having a size greater than 1 mm.

5. A method according to claim 4, wherein the suspension is sieved to remove solid material having a size greater than 0.5 mm.

6. A method according to claim 4, wherein the suspension is sieved to remove material having a size greater than 0.1 mm.

7. A method according to any of the preceding claims, wherein step iii) comprises suspending the solid material from step ii) in water, wherein the weight ratio between water and the solid fraction, the L:S ratio, is from 2 to 15, and wherein pH will self-regulate or is adjusted to a pH from 7 to 11.

8. A method according to any of the preceding claims, wherein the volume of acidic scrubber liquid that is added to said solid waste material is determined by
a) subjecting a known amount of said solid waste material to titration by said acidic scrubber liquid to reach a pH from 4 to 7 whereby the volume of acidic scrubber liquid is obtained,
b) calculating the total amount of acidic scrubber liquid to be added to said waste material to obtain a pH from 4 to 7 and
c) adding from about 50 to 100% w/w of the total volume of acidic scrubber liquid to said waste material.

9. A method according to claim 8, wherein about 80-95% of the total volume of acidic scrubber liquid as determined as defined in claim 8 is added to said solid waste material.

10. A method according to any of the preceding claims, wherein the treated solid waste material from step iii) is subjected to one or more repetitions of step iii).

11. A method according to any of the preceding claims, wherein step i) is carried out at a temperature of from 10°C to 70°C.

12. A method according to any of the preceding claims, wherein the L:S ratio in step iii) is from 4 to 10.

13. A method according to any of the preceding claims, wherein salts are recovered from the halogen salt solution from step iv) or v).

14. A method according to any of the preceding claims, wherein the alkali in step iv) is an alkaline metal hydroxide or an alkaline earth metal hydroxide.

15. A method according to any of the preceding claims, wherein the heavy metal compounds from step v) are dried.

16. A method according to any of the preceding claims, wherein the washing liquid from step iii) is reused in step i).

17. A method according to any of the preceding claims, wherein mercury is present in the solid waste material and/or the acidic scrubber liquid.

18. A method according to claim 17, wherein mercury is not removed from the solid waste material or scrubber liquid prior to step i).

19. A method according to any of the preceding claims, where pH in step iii) is adjusted to from 9.5 to 10.5.

20. A method according to any of the preceding claims, wherein the treated solid waste from step iii) is subjected to one or more repetitions of step iii) until the resulting treated solid waste comply with landfill regulations for non-hazardous waste or hazardous waste.

21. A method according to any of the preceding claims, wherein the treatment with alkaline and/or a sulfide is repeated until the halogen salt solution comply with national effluent standards.

22. A method according to any of the preceding claims, wherein the acidic scrubber liquid is obtained from a cleaning process employing a flue gas cleaning system comprising an acidic scrubber.

23. A method according to any of the preceding claims, wherein the heavy metal content of the heavy metal and halogen salt containing waste material from flue gas cleaning systems that can be recycled comprises one or more of As, Ba, Cd, Cr, Cu, Hg, Mo, Ni, Pb, Sb, Se, Sn, and Zn.

24. A method according to any of the preceding claims, wherein the treated solid waste (X-FGW) is further processed or used directly for cement replacement or as a cement additive in concrete formulations.

## Patentansprüche

1. Ein Verfahren zur Behandlung von schwermetall- und halogensalzhaltigem festen AbfallMaterial hauptsächlich aus Rauchgasreinigungssystemen, das Verfahren umfassend
i) behandeln jenes festen Abfallmaterials mit saurer Waschflüssigkeit, um eine Suspension mit einem pH-Wert von 3 bis 7 in der flüssigen Phase zu erhalten,
ii) trennen des in Schritt i) erhaltenen festen und flüssigen Materials,
iii) behandeln des festen Materials aus Schritt ii) mit Wasser, um einen pH-Wert im Wasser von etwa 7 bis etwa 11 zu erhalten, gefolgt von der Trennung des so gewaschenen festem Material aus der Flüssigkeit, um behandelten festen Abfall zu erhalten,
iv) behandeln des flüssigen Materials aus Schritt ii) mit einem oder mehreren alkalischen Mittel(n) und/oder Sulfiden, um einen pH-Wert von etwa 9 bis 11 zu erhalten, um Schwermetalle auszufällen,
v) optional abtrennen der Schwermetalle aus Schritt iv) aus der Flüssigkeit, um eine Schwermetallfraktion und eine Halogensalzlösung zu erhalten, wobei der pH-Wert in Schritt i) anfänglich bei etwa 11 bis etwa 13 liegt und dann allmählich über einen Zeitraum von 15 bis 90 Minuten auf einen pH-Wert von 3 bis 4 absinkt, da die Waschflüssigkeit zugegeben wird und mit dem Abfall reagiert.

2. Ein Verfahren gemäß Anspruch 1, wobei das feste Abfallmaterial eine Flugasche ist, die Abfallmaterial enthält.

3. Ein Verfahren gemäß Anspruch 1 oder 2, wobei Schritt i) in einem Extraktionstank durchgeführt wird, so dass die flüssige Phase der Suspension auf einem pH-Wert über 3 aber unter 7 gehalten wird, wobei das Gewichtsverhältnis zwischen der Flüssigkeit und dem Abfallmaterial, dem L:S-Verhältnis, zwischen 2 und 15 ist.

4. Ein Verfahren gemäß einem der Ansprüche 1-3, das optional einen Schritt zwischen Schritt i) und Schritt ii) umfasst, wobei der optionale Schritt das Sieben der Suspension umfasst, die in Schritt i) erhalten wird, um das feste Material mit einer Größe von mehr als 1 mm zu entfernen.

5. Ein Verfahren gemäß Anspruch 4, wobei die Suspension gesiebt wird, um das feste Material mit einer Größe von mehr als 0,5 mm zu entfernen.

6. Ein Verfahren gemäß Anspruch 4, wobei die Suspension gesiebt wird, um Material mit einer Größe von mehr als 0,1 mm zu entfernen.

7. Ein Verfahren gemäß einem der vorstehenden Ansprüche, wobei Schritt iii) das Suspendieren des festen Materials aus Schritt ii) in Wasser umfasst, wobei das Gewichtsverhältnis zwischen Wasser und der festen Fraktion, das L:S-Verhältnis, 2 bis 15 ist, und wobei der pH-Wert sich selbst reguliert oder auf einen pH-Wert von 7 bis 11 eingestellt wird.

8. Ein Verfahren gemäß einem der vorstehenden Ansprüche, wobei das Volumen der sauren Waschflüssigkeit, die jenem festen Abfallmaterial hinzugefügt wird, bestimmt wird durch
a) Unterziehen einer bestimmten Menge jenes festen Abfallmaterials einer Titration durch die saure Waschflüssigkeit, um einen pH-Wert von 4 bis 7 zu erreichen, wobei das Volumen der sauren Waschflüssigkeit erhalten wird,
b) Berechnen der Gesamtmenge der sauren Waschflüssigkeit, die jenem Abfallmaterial zugesetzt werden soll, um einen pH-Wert von 4 bis 7 zu erhalten und
c) Zugeben von etwa 50 bis 100% w/w des Gesamtvolumens der sauren Waschflüssigkeit zu jenem Abfallmaterial.

9. Ein Verfahren gemäß Anspruch 8, wobei etwa 80-95% des Gesamtvolumens der sauren Waschflüssigkeit, die wie in Anspruch 8 definiert bestimmt wird, jenem festen Abfallmaterial zugesetzt wird.

10. Ein Verfahren gemäß einem der vorstehenden Ansprüche, wobei das behandelte feste Abfallmaterial aus Schritt iii) einer oder mehreren Wiederholungen von Schritt iii) unterzogen wird.

11. Ein Verfahren gemäß einem der vorstehenden Ansprüche, wobei Schritt i) bei einer Temperatur von 10°C bis 70°C durchgeführt wird.

12. Ein Verfahren gemäß einem der vorstehenden Ansprüche, wobei das L:S-Verhältnis in Schritt iii) von 4 bis 10 ist.

13. Ein Verfahren gemäß einem der vorstehenden Ansprüche, wobei Salze aus der Halogensalzlösung aus Schritt iv) oder v) gewonnen werden.

14. Ein Verfahren gemäß einem der vorstehenden Ansprüche, wobei das Alkali in Schritt iv) ein Alkalimetallhydroxid oder ein Erdalkalimetallhydroxid ist.

15. Ein Verfahren gemäß einem der vorstehenden Ansprüche, wobei die SchwermetallVerbindungen aus Schritt v) getrocknet werden.

16. Ein Verfahren gemäß einem der vorstehenden Ansprüche, wobei die Waschflüssigkeit aus Schritt iii) in Schritt i) wiederverwendet wird.

17. Ein Verfahren gemäß einem der vorstehenden Ansprüche, wobei Quecksilber im festen Abfallmaterial und/oder in der sauren Waschflüssigkeit vorhanden ist.

18. Ein Verfahren gemäß Anspruch 17, wobei Quecksilber nicht aus dem festen Abfallmaterial und/oder der Waschflüssigkeit vor Schritt i) entfernt wird.

19. Ein Verfahren gemäß einem der vorstehenden Ansprüche, wobei der pH-Wert in Schritt iii) von 9,5 auf 10,5 eingestellt wird.

20. Ein Verfahren gemäß einem der vorstehenden Ansprüche, wobei der behandelte feste Abfall aus Schritt iii) einer oder mehreren Wiederholungen von Schritt iii) unterzogen wird, bis der resultierende behandelte feste Abfall den Deponievorschriften für nicht gefährliche Abfälle oder gefährlichen Abfällen entspricht.

21. Ein Verfahren gemäß einem der vorstehenden Ansprüche, wobei die Behandlung mit Alkali und/oder einem Sulfid wiederholt wird, bis die Halogensalzlösung nationalen Abwasserstandards entspricht.

22. Ein Verfahren gemäß einem der vorstehenden Ansprüche, wobei die saure Waschflüssigkeit aus einem Reinigungsverfahren gewonnen wird, das ein Rauchgasreinigung-System nutzt, das einen Säurewäscher umfasst.

23. Ein Verfahren gemäß einem der vorstehenden Ansprüche, wobei der Schwermetall-Gehalt des schwermetall- und halogensalzhaltigen Abfallmaterials aus Rauchgasreinigungssystemen, die recycelt werden können, aus einem oder mehreren As, Sb, Cd, Cr, Cu, Hg, Mo, Ni, Pb, Sb, Se, Sn und Zn besteht.

24. Ein Verfahren gemäß einem der vorstehenden Ansprüche, wobei der behandelte feste Abfall (X-FGW) weiterverarbeitet wird oder direkt für den Zementersatz oder als Zementzusatz in Betonrezepturen verwendet wird.

## Revendications

1. Procédé de traitement de matériau de déchets solides contenant des métaux lourds et des sels d'halogène provenant principalement de systèmes d'épuration de gaz de combustion, le procédé comprenant
i) le traitement audit matériau de déchets solides avec un liquide d'épuration acide pour obtenir une suspension ayant un pH de 3 à 7 dans la phase liquide,
ii) la séparation des matériaux solide et liquide obtenus dans l'étape i),
iii) le traitement du matériau solide de l'étape ii) avec de l'eau pour obtenir un pH dans la phase aqueuse allant d'environ 7 à environ 11 suivi de la séparation du matériau solide ainsi lavé du liquide pour obtenir des déchets solides traités,
iv) le traitement du matériau liquide de l'étape ii) avec un ou plusieurs agent(s) alcalin(s) et/ou sulfures pour obtenir un pH d'environ 9 à 11 pour précipiter les métaux lourds,
v) facultativement, la séparation des métaux lourds de l'étape iv) du liquide pour obtenir une fraction de métaux lourds et une solution de sels d'halogène,
dans lequel le pH dans l'étape i) est initialement d'environ 11 à environ 13, puis diminue progressivement à un pH de 3 à 4 en une durée de 15 à 90 minutes à mesure que le liquide d'épuration est ajouté et réagit avec les déchets.

2. Procédé selon la revendication 1, dans lequel le matériau de déchets solides est un matériau de déchets contenant des cendres volantes.

3. Procédé selon la revendication 1 ou 2, dans lequel l'étape i) est conduite dans une cuve d'extraction de sorte que la phase liquide de la suspension est maintenue à un pH supérieur à 3 mais inférieur à 7, dans lequel le rapport en poids entre le liquide et le matériau de déchets, le rapport L:S, est de 2 à 15.

4. Procédé selon l'une quelconque des revendications 1 à 3, comprenant facultativement une étape entre l'étape i) et l'étape ii), dans lequel l'étape facultative comprend le tamisage de la suspension obtenue dans l'étape i) pour retirer un matériau solide ayant une taille supérieure à 1 mm.

5. Procédé selon la revendication 4, dans lequel la suspension est tamisée pour retirer un matériau solide ayant une taille supérieure à 0,5 mm.

6. Procédé selon la revendication 4, dans lequel la suspension est tamisée pour retirer un matériau solide ayant une taille supérieure à 0,1 mm.

7. Procédé selon l'une quelconque des revendications précédentes, dans lequel l'étape iii) comprend la suspension du matériau solide de l'étape ii) dans l'eau, dans lequel le rapport en poids entre l'eau et la fraction solide, le rapport L:S, est de 2 à 15, et dans lequel le pH s'autorégule ou est ajusté à un pH de 7 à 11.

8. Procédé selon l'une quelconque des revendications précédentes, dans lequel le volume de liquide d'épuration acide qui est ajouté audit matériau de déchets solides est déterminé par
a) soumission d'une quantité connue audit matériau de déchets solides à un titrage par ledit liquide d'épuration acide pour atteindre un pH de 4 à 7 par lequel le volume de liquide d'épuration acide est obtenu,
b) calcul de la quantité totale de liquide d'épuration acide à ajouter audit matériau de déchets pour obtenir un pH de 4 à 7 et
c) ajout d'environ 50 à 100 % m/m du volume total de liquide d'épuration acide audit matériau de déchets.

9. Procédé selon la revendication 8, dans lequel environ 80 à 95 % du volume total de liquide d'épuration acide tel que déterminé comme défini dans la revendication 8 est ajouté audit matériau de déchets solides.

10. Procédé selon l'une quelconque des revendications précédentes, dans lequel le matériau de déchets solides traité de l'étape iii) est soumis à une ou plusieurs répétitions de l'étape iii).

11. Procédé selon l'une quelconque des revendications précédentes, dans lequel l'étape i) est conduite à une température de 10 °C à 70 °C.

12. Procédé selon l'une quelconque des revendications précédentes, dans lequel le rapport L:S dans l'étape iii) est de 4 à 10.

13. Procédé selon l'une quelconque des revendications précédentes, dans lequel des sels sont récupérés à partir de la solution de sels d'halogène de l'étape iv) ou v).

14. Procédé selon l'une quelconque des revendications précédentes, dans lequel l'alcali dans l'étape iv) est un hydroxyde de métal alcalin ou un hydroxyde de métal alcalinoterreux.

15. Procédé selon l'une quelconque des revendications précédentes, dans lequel les composés de métaux lourds de l'étape v) sont séchés.

16. Procédé selon l'une quelconque des revendications précédentes, dans lequel le liquide de lavage de l'étape iii) est réutilisé dans l'étape i).

17. Procédé selon l'une quelconque des revendications précédentes, dans lequel du mercure est présent dans le matériau de déchets solides et/ou le liquide d'épuration acide.

18. Procédé selon la revendication 17, dans lequel le mercure n'est pas retiré du matériau de déchets solides ou du liquide d'épuration avant l'étape i).

19. Procédé selon l'une quelconque des revendications précédentes, dans lequel le pH dans l'étape iii) est ajusté à 9,5 à 10,5.

20. Procédé selon l'une quelconque des revendications précédentes, dans lequel les déchets solides traités de l'étape iii) sont soumis à une ou plusieurs répétitions de l'étape iii) jusqu'à ce que les déchets solides traités résultants soient conformes à la réglementation relative aux décharges pour les déchets non dangereux ou les déchets dangereux.

21. Procédé selon l'une quelconque des revendications précédentes, dans lequel le traitement avec un alcali et/ou un sulfure est répété jusqu'à ce que la solution de sels d'halogène soit conforme aux normes nationales relatives aux effluents.

22. Procédé selon l'une quelconque des revendications précédentes, dans lequel le liquide d'épuration acide est obtenu à partir d'un processus d'épuration en utilisant un système d'épuration de gaz de combustion comprenant un épurateur acide.

23. Procédé selon l'une quelconque des revendications précédentes, dans lequel la teneur en métaux lourds du matériau de déchets contenant des métaux lourds et des sels d'halogène provenant de systèmes d'épuration de gaz de combustion qui peut être recyclé comprend l'un ou plusieurs parmi As, Ba, Cd, Cr, Cu, Hg, Mo, Ni, Pb, Sb, Se, Sn et Zn.

24. Procédé selon l'une quelconque des revendications précédentes, dans lequel les déchets solides traités (X-FGW) sont traités ultérieurement ou utilisés directement pour le remplacement de ciment ou en tant qu'additif de ciment dans des formulations de béton.
